# EUROPÄISCHE PATENTSCHRIFT

(11) **EP 1 432 602 B1**
(45) Veröffentlichungstag und Bekanntmachung des Hinweises auf die Patenterteilung: **14.12.2005**
(21) Anmeldenummer: 03746806.3
(22) Anmeldetag: 15.04.2003
(51) Int. Cl.: B62B 3/02, A63B 55/08

(54) **WAGEN**
CARRIAGE
CHARIOT

(30) Priorität: 20.04.2002 DE 10217764
(43) Veröffentlichungstag der Anmeldung: 30.06.2004
(73) Patentinhaber: Fricker, Siegfried, D-71296 Heimsheim (DE)
(72) Erfinder: Fricker, Siegfried, D-71296 Heimsheim (DE)
(74) Vertreter: Riedel, Peter
(86) Internationale Anmeldenummer: PCT/DE2003/001267
(87) Internationale Veröffentlichungsnummer: WO 2003/089285

(56) Entgegenhaltungen:
- WO-A-97/45311
- DE-C- 19 914 385
- FR-A- 2 795 652
- GB-A- 607 387
- GB-A- 648 714
- US-A- 5 857 684
- US-B1- 6 283 238

## Beschreibung

Die Erfindung betrifft einen Wagen der im Oberbegriff des Anspruchs 1 angegebenen Gattung.

Aus der DE 199 14 385 C1 ist ein Golfwagen bekannt, dessen Deichselarm zweiteilig ausgebildet und auf einen Fahrwerksrahmen abklappbar ist. Zum Transport werden die Hinterräder des Wagens sowie die vordere Lenkrolle abgenommen. Ein derartiger Golfwagen weist eine geringe Stabilität auf. Beim Transport sind eine Reihe von Einzelteilen zu befördern.

Der Erfindung liegt die Aufgabe zugrunde, einen Wagen der gattungsgemäßen Art zu schaffen, der im Gebrauchszustand eine hohe Stabilität besitzt und im Transportzustand ein kompaktes Volumen aufweist.

Diese Aufgabe wird durch einen Wagen mit den Merkmalen des Anspruchs 1 gelöst.

Die Steckachsen der Hinterräder ermöglichen einen großen Radabstand, so daß eine ausreichende Stabilität gegeben ist. Im Transportzustand sind die Hinterräder am Chassis gehalten. Der Wagen weist dadurch ein kompaktes Volumen auf.

Vorteilhaft sind die Hinterräder im Transportzustand auf dem Chassis liegend gehalten. Zweckmäßig weist das Chassis eine Breite auf, die im wesentlichen dem Durchmesser des Hinterrads entspricht, und besitzt eine Länge, die etwa das Doppelte des Durchmessers des Hinterrads beträgt. Im Transportzustand stehen die Hinterräder somit nicht über das Chassis hinaus.

Zweckmäßig sind als Mittel zur Halterung am Chassis angeordnete Aufnahmen vorgesehen, in die die Steckachsen einführbar sind. Somit sind die Steckachsen sicher gehalten und die Hinterräder können einfach am Chassis fixiert und von diesem gelöst werden. Vorteilhaft sind die Steckachsen in den Aufnahmen kraftschlüssig gehalten.

Um ein geringes Volumen im Transportzustand zu erreichen ist vorgesehen, daß die Griffstange einen oberen Abschnitt, an dem der Handgriff angeordnet ist, und einen unteren Abschnitt, der am Chassis festgelegt ist, aufweist, wobei die beiden Abschnitte im Transportzustand auf das Chassis geklappt sind.

Es ist vorgesehen, daß die Hinterräder im Transportzustand auf der geklappten Griffstange aufliegen. Die Höhe des Wagens im Transportzustand ist somit im wesentlichen durch die Höhe des Chassis, den Durchmesser der Griffstange und die Breite der Hinterräder bestimmt.

Für eine große Stabilität des Wagens im Gebrauchszustand ist vorgesehen, daß die Griffstange am Chassis schwenkbar gelagert und im Gebrauchszustand am Chassis mittels einer Schraube spielfrei fixierbar ist. Um ein einfaches und schnelles Fixieren und Lösen der Griffstange zu ermöglichen, ist die Schraube am Chassis zweckmäßig aus dem Bereich der Griffstange herausschwenkbar gelagert. Damit auch bei geneigt verlaufendem Gelände einer Kippneigung entgegen gewirkt wird, ist weiter vorgesehen, daß der Wagen zwei Vorderräder aufweist. Die Vorderräder sind vorteilhaft an einem Rahmenelement festgelegt, wobei das Rahmenelement am Chassis um eine quer zur Längsrichtung des Chassis verlaufende Schwenkachse gelagert und im Transportzustand zum Chassis hin geklappt ist. Hierdurch läßt sich ein geringes Transportvolumen realisieren. Für die einfache Montage und Demontage der Hinterräder ist vorgesehen, daß die Steckachsen über Schieberasten am Chassis formschlüssig fixiert sind, wobei die Schieberasten insbesondere an am Chassis angeordneten Getriebegehäusen fixiert sind.

Vorteilhaft ist der Wagen von einem Elektromotor angetrieben, wobei als Energiequelle eine Batterie dient, die in einer Batterieaufnahme im Chassis herausnehmbar angeordnet ist. Im Transportzustand kann die Batterie im Chassis verbleiben. Das Volumen des Wagens im Transportzustand wird durch die im Chassis verbleibende Batterie nicht vergrößert. Da die Batterie nicht entnommen werden muß, ist der Wagen mit Batterie einfach komplett transportierbar. Zur Gewichtsreduktion kann es jedoch vorteilhaft sein, die Batterie zum Transport aus dem Chassis zu entnehmen. Zweckmäßig ist die Batterie eine wiederaufladbare Akkueinheit, die insbesondere ein geringes Gewicht aufweist. Eine gute, sichere Kontaktierung der Batterie ergibt sich durch die Anordnung von Kontaktbügeln in der Batterieaufnahme, wobei die Pole der Batterie auf den Kontaktbügeln aufliegen. Durch das Eigengewicht der Batterie ist eine sichere Kontaktierung gewährleistet. Die Anordnung der Batterie im Chassis führt zu einem niedrigen Schwerpunkt des Wagens und somit zu einer hohen Kippstabilität. Um sicherzustellen, daß die Batterie im Transportzustand nicht kontaktiert ist, ist vorgesehen, daß am Chassis ein Steckkontakt angeordnet ist, über den die Batterie mit dem Motor verbindbar ist, wobei der Steckkontakt unmittelbar benachbart zu einer Aufnahme angeordnet ist. Hierdurch ist vermieden, daß bei verbundenem Steckkontakt die Steckachse in die Aufnahme gesteckt werden kann. Vorteilhaft treibt der Motor den Wagen über ein Getriebe an, das in einem im wesentlichen abgeschlossenen Getriebegehäuse angeordnet ist. Hierdurch ist das Getriebe vor Verschmutzungen geschützt. Das Getriebegehäuse ist insbesondere durch eine außerhalb am Chassis angeordnete Abdeckung und einen im Chassis angeordneten Deckel gebildet.

Die Vorderräder weisen einen Durchmesser auf, der maximal einer aus der Höhe des Chassis und den darauf in den Aufnahmen gehaltenen Hinterrädern gebildeten Gesamthöhe entspricht. Im Transportzustand ragen die Vorderräder somit nicht über das kompakte Paket hinaus. Zweckmäßig weist das Rahmenelement eine Auflage für das Behältnis auf, wobei die Auflage für das Behältnis im Transportzustand insbesondere die Batterie fixiert. Ein Herausfallen der Batterie beim Transport ist somit vermieden, ohne daß zusätzliche Bauelemente benötigt werden. Für eine hohe Stabilität des Wagens ist vorgesehen, daß das Rahmenelement im Gebrauchszustand am Chassis durch Verspannen mit einer Schraube spielfrei fixiert ist.

Vorteilhaft sind die beiden Abschnitte der Griffstange über ein seitlich zur Längserstreckung der Griffstange angeordnetes Zwischenstück miteinander verbunden. Eine vorteilhafte Anordnung im Transportzustand ergibt sich, wenn die Breite des Zwischenstücks zwischen den Abschnitten der Griffstange mindestens dem Durchmesser der Steckachsen, insbesondere dem Außendurchmesser der Aufnahmen für die Steckachsen entspricht. Die Steckachsen bzw. die Aufnahmen für die Steckachsen ragen so im Transportzustand zwischen die beiden Abschnitte der Griffstange. Das Zwischenstück legt insbesondere definierte Positionen der Abschnitte der Griffstange zueinander fest. Hierdurch ist ein einfaches Aufbauen und Zusammenlegen des Wagens gewährleistet. Zum Abstützen des Behältnisses ist zweckmäßig eine Stütze vorgesehen, wobei die Stütze am Zwischenstück der Griffstange festgelegt ist.

Zweckmäßig ist am Handgriff ein Schirmhalter angeordnet, wobei der Schirmhalter sowohl als Halter für einen Sonnenals auch für einen Regenschirm dienen kann. Für ein geringes Transportvolumen ist vorgesehen, daß der Schirmhalter im Transportzustand um 90° um die Längsachse des Handgriffs gedreht ist.

Vorteilhaft ist das Chassis aus einem im wesentlichen U-förmig gebogenen Blech gebildet, wobei die Endabschnitte der Schenkel des U selbst U-förmig zum Inneren des U gebogen sind und auf diese Weise Längsstreben bilden. Hierdurch ergibt sich eine einfache Herstellbarkeit sowie eine hohe Stabilität des Chassis. Es ist vorgesehen, daß die Hinterräder in einer Drehrichtung einen Freilauf aufweisen. Dadurch ist ein einfaches Ziehen oder Schieben auch ohne Motoreinsatz gewährleistet.

Eine einfache Ausgestaltung ergibt sich, wenn das Chassis aus zwei gebogenen Blechen gebildet ist, die miteinander vernietet sind. Insbesondere bildet ein Blech ein Bodenelement, das einteilig mit einer Vorderwand und einer Rückwand ausgebildet ist, und das andere Blech einen Rahmen, der die Oberseite und die Seitenwände des Chassis bildet.

Ausführungsbeispiele der Erfindung werden im folgenden in allen Merkmalen anhand der Zeichnung erläutert. Es zeigen:
- Fig. 1: eine perspektivische Ansicht auf ein Caddie mit einer Golftasche,
- Fig. 2: eine perspektivische Ansicht auf den Caddie aus Fig. 1 im Transportzustand,
- Fig. 3: eine perspektivische Ansicht auf den Caddie aus Fig. 1 im Betriebszustand,
- Fig. 4: eine perspektivische Ansicht auf den Caddie aus Fig. 1 mit teilweise abgeklappter Griffstange,
- Fig. 5: eine perspektivische Teilansicht des Caddies aus Fig. 1,
- Fig. 6: eine perspektivische Ansicht auf den Caddie aus Fig. 1 mit entnommener Batterie,
- Fig. 7: eine perspektivische Ansicht des Zwischenstücks der Griffstange des Caddies aus Fig. 1,
- Fig. 8: eine perspektivische Ansicht auf die Batterieaufnahme des Caddies aus Fig. 1,
- Fig. 9: eine perspektivische Ansicht auf den Caddie aus Fig. 1 mit teilweise abgeklappter Griffstange und zum Chassis geklapptem Rahmenelement,
- Fig. 10: eine perspektivische Ansicht auf den Caddie aus Fig. 1 im Transportzustand, jedoch mit separaten Hinterrädern,
- Fig. 11: eine Draufsicht auf ein Caddie,
- Fig. 12: eine Seitenansicht eines Caddies,
- Fig. 13: eine Seitenansicht der Griffstange des Caddies aus Fig. 11 in Richtung des Pfeils XIII in Fig. 14,
- Fig. 14: eine Draufsicht auf die Griffstange des Caddies in Richtung des Pfeils XIV in Fig. 12,
- Fig. 15: eine Seitenansicht eines Bodenelements des Caddies aus Fig. 11,
- Fig. 16: eine Draufsicht auf das Bodenelement aus Fig.15,
- Fig. 17: eine Seitenansicht des Rahmens des Caddies aus Fig. 11,
- Fig. 18: eine Seitenansicht eines Halterungsblechs des Caddies aus Fig. 11,
- Fig. 19: eine Draufsicht auf das Halterungsblech aus Fig. 18,
- Fig. 20: eine Seitenansicht des Chassis im Bereich des Motorgehäuses,
- Fig. 21: einen Längsschnitt durch das Chassis im Bereich des Motorgehäuses.

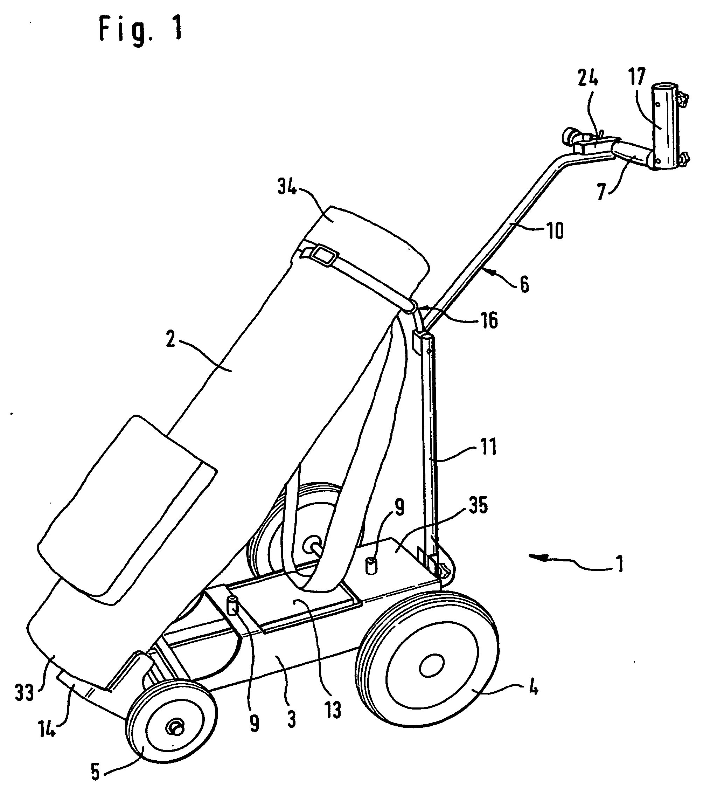

Fig. 1 zeigt einen Wagen zum Transport eines Behältnisses, hier einen Golfcaddie 1 zum Transport einer Golftasche 2. Der Caddie 1 ist mittels vier Rädern 4, 5 abgestützt und umfaßt eine Batterie 13 zur Bereitstellung elektrischer Energie für einen Elektromotor, der über ein Getriebe die beiden Hinterräder 4 antreibt. Die beiden Hinterräder 4 sind wie die beiden Vorderräder 5 an einem Chassis 3 festgelegt. Im Chassis 3 ist ein Motorgehäuse 35 ausgebildet, in dem der Motor angeordnet ist. Am Chassis 3 ist eine Griffstange 6 fixiert, die leicht außermittig zwischen den beiden Hinterrädern am rückwärtigen Ende des Chassis 3 festgelegt ist. Die Griffstange 6 weist einen unteren Abschnitt 11 auf, der mit dem Chassis 3 verbunden ist und einen oberen Abschnitt 10, an dem ein Handgriff 7 angeordnet ist.

Der Handgriff 7 erstreckt sich beidseitig von der Griffstange 6. Dadurch ist gewährleistet, daß der Wagen sowohl mit der linken oder der rechten Hand, also von Linkshändern oder Rechtshändern, als auch beidhändig auf einfache Weise und benutzerfreundlich bedient werden kann. Im Bereich des Hangriffs 7 ist am oberen Abschnitt 10 der Griffstange 6 eine Bedieneinheit 24 zur Steuerung des Antriebsmotors angeordnet. Am Handgriff 7 ist außerdem ein Schirmhalter 17 angeordnet, der aus einem senkrecht zum Handgriff 7 fixierten Rohrabschnitt mit einer Klemmschraube besteht und in dem ein Sonnen- oder Regenschirm fixiert werden kann.

Im Chassis 3 sind zwei Aufnahmen 9 ausgebildet, die sich im Gebrauchszustand des Caddies etwa vertikal oberhalb des Chassis 3 erstrecken und die zylindrisch ausgebildet sind. Im Bereich der Vorderräder 5 ist eine Auflage 14 ausgebildet, auf der die Golftasche 2 mit ihrem unteren Ende 33 aufliegt. Im Bereich der Griffstange 6 liegt die Golftasche 2 mit ihrem oberen Ende 34 an einer Stütze 16 an. Die Auflage 14 stützt die Golftasche 2 sowohl in ihrer Längsrichtung als auch in radialer Richtung, während die Stütze 16 die Golftasche 2 vorwiegend in radialer Richtung hält.

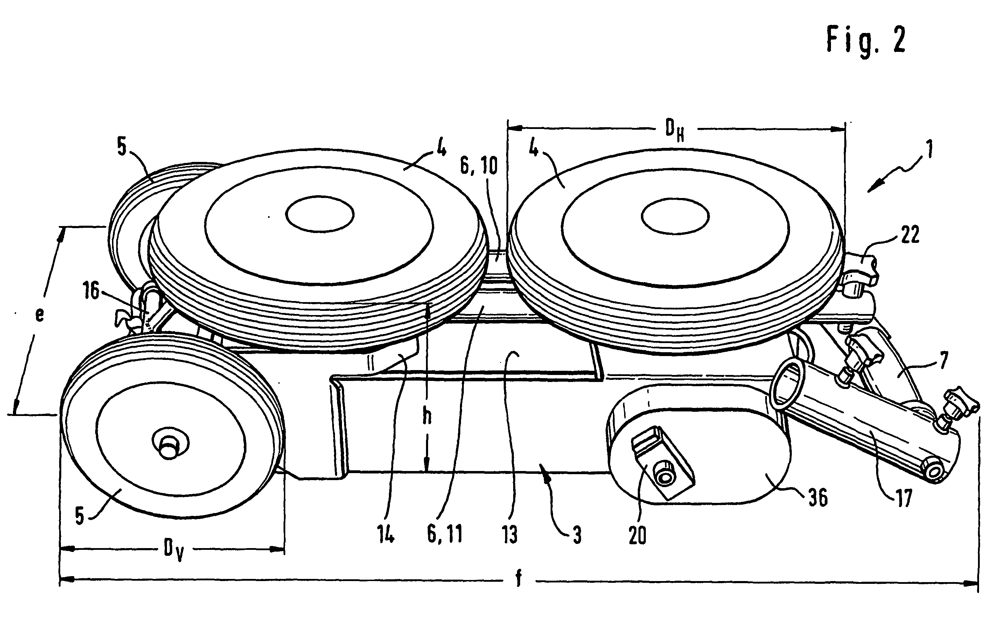

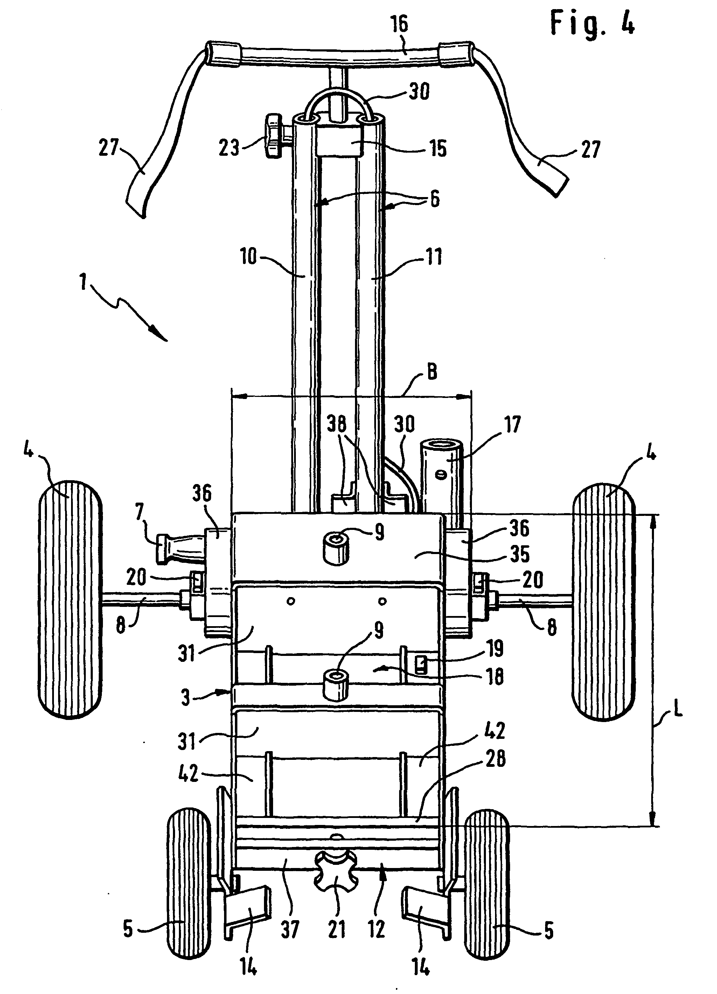

In Fig. 2 ist der Caddie 1 im Transportzustand dargestellt. Die Höhe h des Caddies 1 wird im wesentlichen von der Höhe des Chassis 3, dem Durchmesser der Griffstange 6 und der Breite der Hinterräder 4 bestimmt. Der Durchmesser D_{V} der Vorderräder 5 entspricht maximal der Höhe h. Die Hinterräder 4 liegen im Transportzustand auf dem Chassis 3 auf. Die Breite e des Caddies 1, d. h. die Erstreckung parallel zu den Achsen der Räder 4, 5 im Betriebszustand, wird im wesentlichen durch die in Fig. 4 dargestellte Breite B des Chassis 3 und die Breite der Vorderräder 5 bestimmt. Die Länge f des Caddies 3 entspricht etwa der in Fig. 4 dargestellten Länge L des Chassis 3 im Gebrauchszustand. Der Durchmesser D_{H} der Hinterräder 4 entspricht etwa der Breite e und etwa der halben Länge f, wobei der Durchmesser D_{H} vorteilhaft der Breite B des Chassis 3 und der halben Länge L des Chassis 3 entspricht. Der Caddie 1 bildet somit im Transportzustand ein kompaktes Paket.

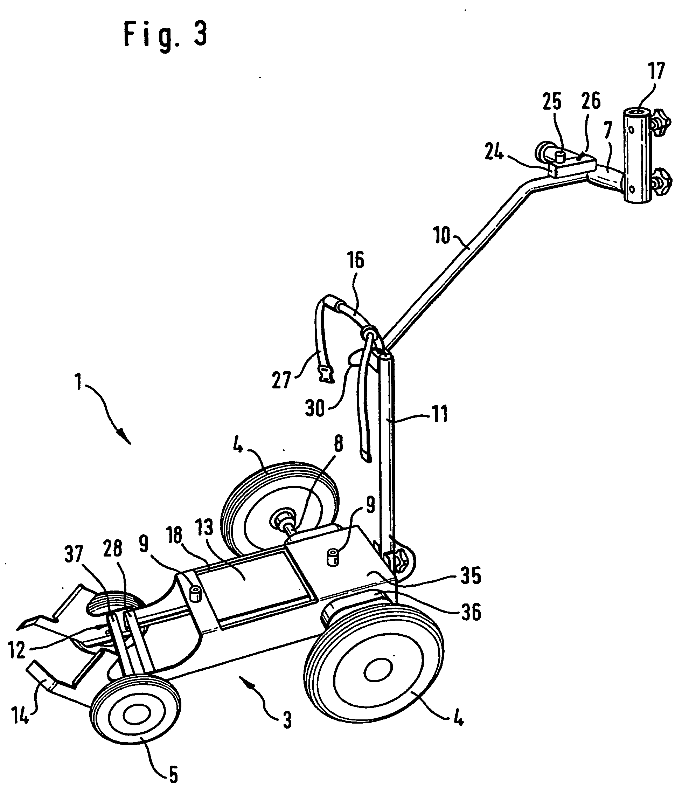

In Fig. 3 ist der Caddie 1 im Gebrauchszustand ohne die Golftasche 2 dargestellt. Die Batterie 13 ist in einer Batterieaufnahme 18 im Chassis 3 angeordnet. In Fahrtrichtung gesehen sind vor und hinter der Batterieaufnahme 18 etwa mittig im Chassis 3 je eine zylindrische Aufnahme 9 angeordnet, die - wie später noch näher erläutert wird - zur Halterung der Hinterräder 4 während des Transports dient. Im Bereich der Vorderräder 5 weist das Chassis eine Querstrebe 28 auf, die beispielsweise als Rohr mit rechteckigem Querschnitt ausgebildet und seitlich am Chassis angeschweißt sein kann. Die Vorderräder 5 sind beidseitig an einem Rahmenelement 12 angeordnet, wobei das Rahmenelement 12 eine Querstrebe 37 und zwei seitliche Blechabschnitte, an denen die Auflage 14 ausgebildet ist, umfaßt. Die seitlichen Blechabschnitte verlaufen im wesentlichen parallel zur Längserstreckung des Chassis 3. Die Querstrebe 37 des Rahmenelementes 12 ist parallel zur Querstrebe 28 des Chassis 3 angeordnet und gegenüber dieser in Fahrtrichtung nach vorne versetzt.

Im Chassis 3 ist das Motorgehäuse 35 ausgebildet, das gegenüber der Batterieaufnahme 18 entgegen der Fahrtrichtung versetzt angeordnet ist. Die Hinterräder 4 weisen Steckachsen 8 auf, durch die der Radstand der Hinterräder vergrößert ist. Mittels der Steckachsen 8 sind die Hinterräder 4 leicht montierbar und demontierbar. Außerdem sind die Steckachsen 8 dazu vorgesehen, für den Transportzustand in die zylindrischen Aufnahmen 9 eingesteckt zu werden, so daß die Hinterräder entsprechend der Darstellung in Fig. 2 gehalten sind. Die Stütze 16 weist einen Gurt 27 zur Fixierung einer Golftasche 2 auf. Die Stütze 16 ist etwa T-förmig ausgebildet und aus zwei Rohrabschnitten zusammengesetzt, wobei der Gurt 27 vorteilhaft durch das Rohr, das die Auflage für die Golftasche 2 bildet, durchgezogen ist. Die am oberen Abschnitt 10 der Griffstange 6 angeordnete Bedieneinheit 24 umfaßt zweckmäßig einen Geschwindigkeitsstellknopf 25 und einen Ein-/Ausschalter 26.

In Fig. 4 ist der Caddie 1 mit Blick auf das Chassis 3 von vorn dargestellt, wobei der obere Abschnitt 10 der Griffstange 6 abgeklappt ist. Der obere Abschnitt 10 der Griffstange 6 ist am unteren Abschnitt 11 über ein Zwischenstück 15 gelagert. Zur Fixierung dient die Schraube 23. Zur elektrischen Verbindung des im Motorgehäuse 35 angeordneten Motors mit der Bedieneinheit 24 ist durch die Griffstange 6 ein Kabel 30 geführt. Am Motorgehäuse 35 sind beidseitig Getriebegehäuse 36 angeordnet, an denen die Steckachsen 8 der Hinterräder 4 über Schieberasten 20 fixiert sind. Die Schieberasten 20 fixieren die Steckachsen 8 formschlüssig. Es kann jedoch auch eine kraftschlüssige Fixierung der Steckachsen 8 zweckmäßig sein. Das Chassis 3 weist eine Breite B parallel zu den Radachsen und eine Länge L senkrecht dazu auf, wobei die Breite B die Breite der Getriebegehäuse 36 mit umfaßt.

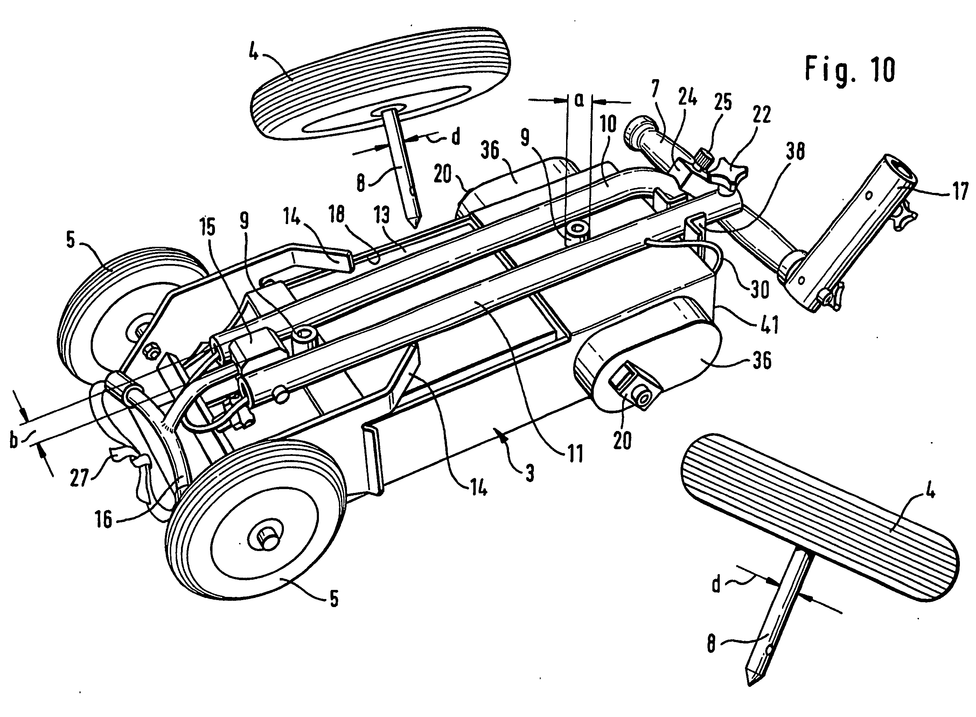

Die Hinterräder 4 sind mit einem Freilauf ausgestattet, so daß sich der Caddie 1 in Fahrtrichtung auch ohne Motorantrieb einfach bewegen läßt. Durch Umstecken der Hinterräder 4 wirkt der Freilauf in die entgegengesetzte Richtung, d. h. der Caddie 1 läßt sich einfach ziehen. Die Steckachsen 8 sind wie insbesondere in Fig. 10 dargestellt von der Rückwand 41 des Chassis 3 in Fahrtrichtung nach vorne versetzt angeordnet. Hierdurch ergibt sich eine günstige Gewichtsverteilung, da der Motor im Motorgehäuse 35 auf der einen Seite der Steckachsen 8, insbesondere in Fahrtrichtung hinter den Steckachsen und die Batterie 13 in der Batterieaufnahme 18 auf der anderen Seite der Steckachsen 8 angeordnet ist. Der Wagen läßt sich leicht um die durch die Steckachsen 8 gebildete Achse schwenken, so daß die Vorderräder 5 vom Boden abgehoben sind. In dieser Position läßt sich der Wagen einfach ziehen. Insbesondere bei Störungen am Antrieb oder der Energieversorgung ist der Wagen durch Umstecken der Steckachsen 8 einfach und mit geringem Kraftaufwand zu ziehen. Durch Umschalten der Drehrichtung des Motors ist ein Antrieb des Caddies entgegen der normalen Fahrtrichtung möglich. Die Vorderräder 5 des Caddies besitzen ebenfalls einen Freilauf, so daß sie entgegen der Fahrtrichtung blockieren. Hierdurch kann ein unbeabsichtigtes Wegrollen des Caddies vermieden werden.

Das Chassis 3 ist aus einem gebogenen Blech gebildet, wobei das Blech im wesentlichen U-förmig gebogen ist. Als Material für das Chassis 3 kommen insbesondere Aluminiumlegierungen in Betracht. Insbesondere für die Herstellung des Wagens in größeren Stückzahlen ist vorgesehen, daß das Chassis 3 komplett aus Kunststoff gespritzt ist. Die Enden der Schenkel des U sind selbst jeweils U-förmig zur Mitte des U gebogen und bilden auf diese Weise Längsstreben 42 von großer Steifigkeit bei geringer Materialstärke. Im Bereich der Batterieaufnahme 18 ist das Chassis an der Oberseite ausgestanzt. Die umgebogenen Enden des U bilden die Auflage für die Batterie. Die ausgestanzten Abschnitte werden in das U-förmige Chassis 3 quer zu dessen Längsrichtung eingesetzt und bilden auf diese Weise die Seitenwände 31 der Batterieaufnahme 18. Das Rahmenelement 12, an dem die Vorderräder 5 angeordnet sind, ist durch Verspannen mittels einer Schraube 21 am Chassis 3 spielfrei fixiert. Die Schraube 21 ist in einer die Querstrebe 37 des Rahmenelementes 12 durchragenden Gewindehülse gelagert und gegen ein Anschlagelement an der Querstrebe 28 des Chassis 3 verschraubt.

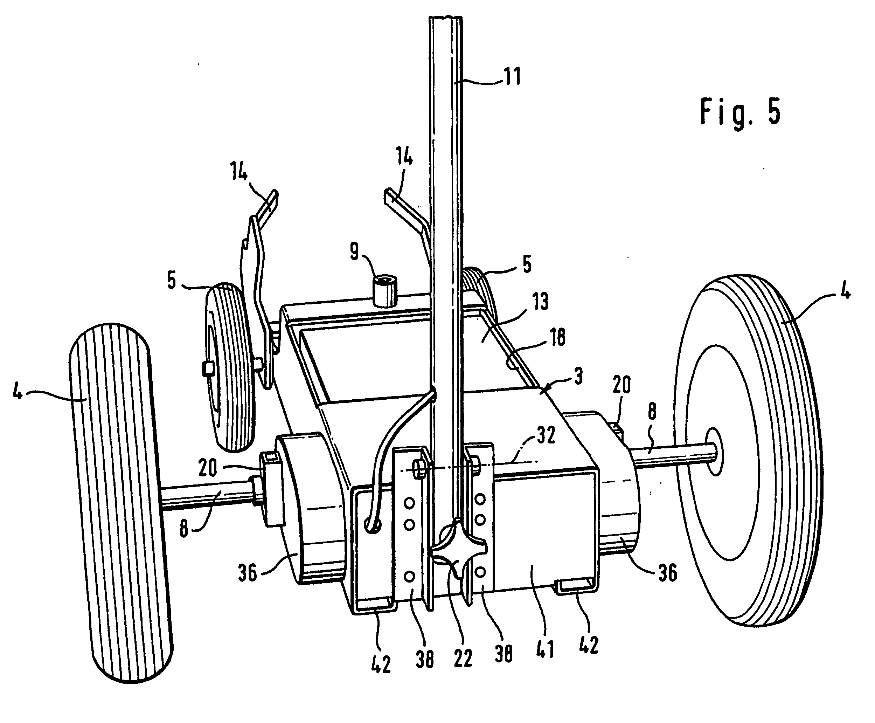

In Fig. 5 ist die Fixierung des unteren Abschnitts 11 der Griffstange 6 dargestellt. Der untere Abschnitt 11 ist in einer Halterung 38 geführt, die beispielsweise durch zwei L-förmige Bleche gebildet sein kann. Der untere Abschnitt 11 der Griffstange 6 ist um eine Achse 32 drehbar gelagert. Unterhalb der Drehachse 32 ist die Schraube 22 angeordnet, mit der der untere Abschnitt 11 der Griffstange 6 am Chassis 3 verschraubt werden kann. Hierdurch ergibt sich eine gute, stabile und spielfreie Fixierung der Griffstange 6. Die Halterung 38 ist nicht mittig zwischen den Hinterrädern 4 angeordnet sondern gegenüber der Mitte seitlich versetzt, so daß in der Transportstellung die Griffstange neben den in Fig. 3 und 4 gezeigten Aufnahmen 9 zu liegen kommt.

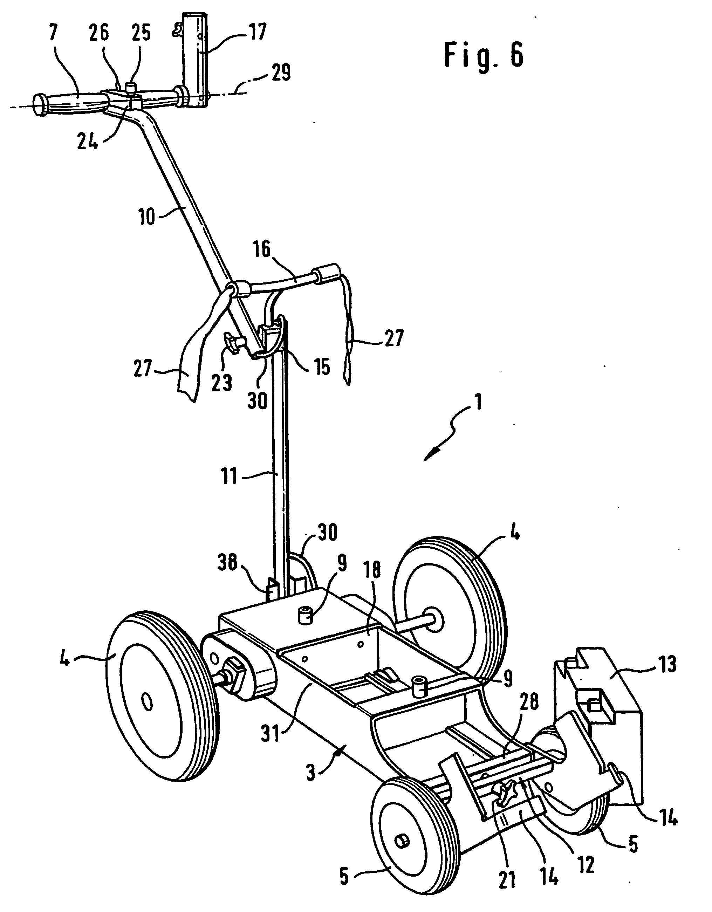

Fig. 6 zeigt den Caddie 1 mit entnommener Batterie 13. Die Batterieaufnahme 18 ist etwa rahmenförmig gestaltet. Dadurch wird ein einfaches Entnehmen und Einsetzen der Batterie 13 gewährleistet. Die Batterieaufnahme 18 kann durch einen Deckel verschlossen sein. Es kann auch zweckmäßig sein, die Batterieaufnahme 18 nach oben zu verschließen und so zu gestalten, daß die Batterie von unten, also von der der Golftasche 2 abgewandten Seite, eingesetzt werden kann. Die Batterie 13 ist dadurch im Betrieb des Caddies 1 für den Bediener nicht sichtbar. Es können auch andere konstruktive Gestaltungen vorteilhaft sein, durch die die Batterie 13 nicht sichtbar im Chassis 3 gehalten ist. Am Handgriff 7 ist der Schirmhalter 17 angeordnet. Dieser ist um die Längsachse 29 des Handgriffs 7 drehbar, wobei der Schirmhalter 17 in vorgegebenen Stellungen, insbesondere in um 90° gegeneinander verdrehten Stellungen, am Handgriff 7 fixiert werden kann. Die Fixierung geschieht beispielsweise durch eine Schraube, die in einen im Handgriff 7 angeordneten Gewindeabschnitt oder eine Vertiefung gedreht werden kann.

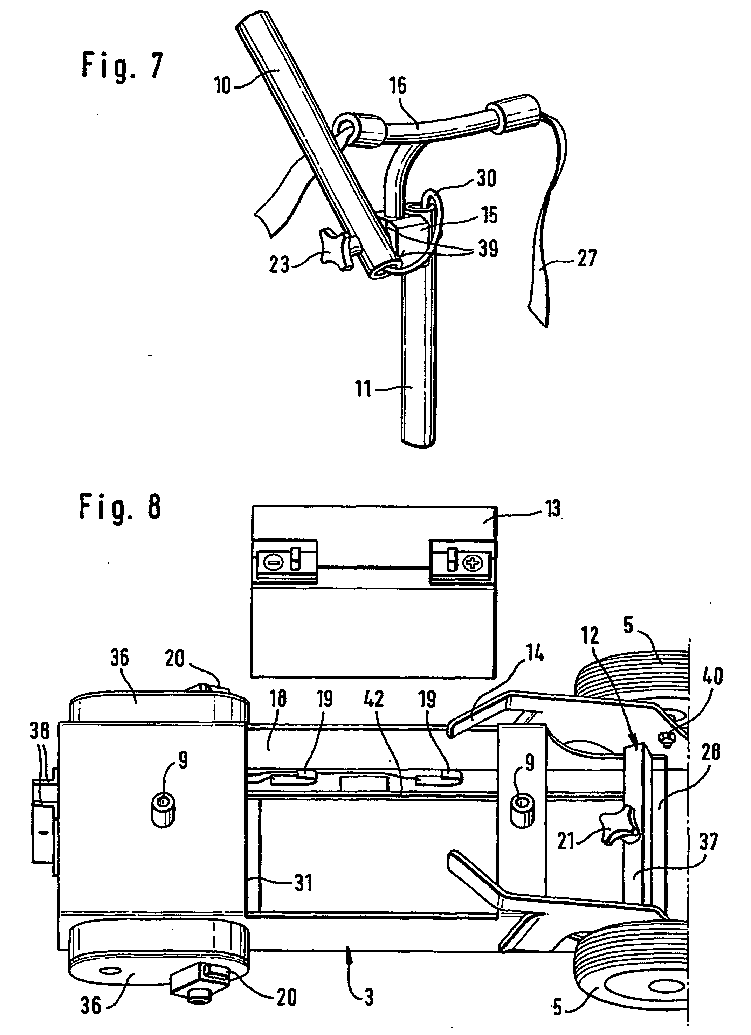

In Fig. 7 ist das Zwischenstück 15 zwischen dem oberen Abschnitt 10 und dem unteren Abschnitt 11 der Griffstange 6 vergrößert dargestellt. Das Zwischenstück 15 ist am unteren Abschnitt 11 angeschweißt. Am Zwischenstück 15 ist die Stütze 16 fixiert. Auf der dem oberen Abschnitt 10 zugewandten Seite des Zwischenstücks 15 sind Nuten 39 eingebracht, deren Radius dem Rohrradius des oberen Abschnitts 10 entspricht. Dadurch sind verschiedene Positionen von oberem Abschnitt 10 und unterem Abschnitt 11 zueinander festgelegt. Der obere Abschnitt 10 ist über eine Schraube 23 am Zwischenstück 15 fixierbar. Die festgelegten Positionen zueinander sind vorteilhaft eine lineare Position und eine um etwa 45° abgewinkelte Position der Abschnitte 10, 11 zueinander.

Wie aus Fig. 8 ersichtlich sind in der Batterieaufnahme 18 auf einer der Längsstreben 42 des Chassis 3 zwei Kontaktbügel 19 angeordnet. Die Batterie 13 ist im Chassis 3 auf den Längsstreben 42 abgestützt und liegt mit den Batteriepolen auf den Kontaktbügeln 19. Eine gute Kontaktierung wird somit durch das Gewicht der Batterie 13 gewährleistet. Das Rahmenelement 12 ist in Fig. 8 im zum Chassis 3 geklappten Zustand, d. h. der Transportstellung dargestellt. Die Schraube 21 ist gelöst und das Rahmenelement 12 um die Querstrebe 28 zum Chassis 3 zu geklappt. Aufgrund des Abstands der Achse 40 der Vorderräder 5 zur Querstrebe 28 sind die Vorderräder 5 gegenüber dem Gebrauchszustand nach oben und auf das Chassis hin versetzt angeordnet. Die Auflage 14 ist teilweise oberhalb der Batterieaufnahme 18 angeordnet und kann so im Transportzustand die Batterie 13 fixieren, sofern diese zur Verminderung des Transportgewichts nicht aus dem Chassis 3 entnommen ist. Die seitlichen Bleche des Rahmenelementes 12 liegen weitgehend am Chassis 3 an.

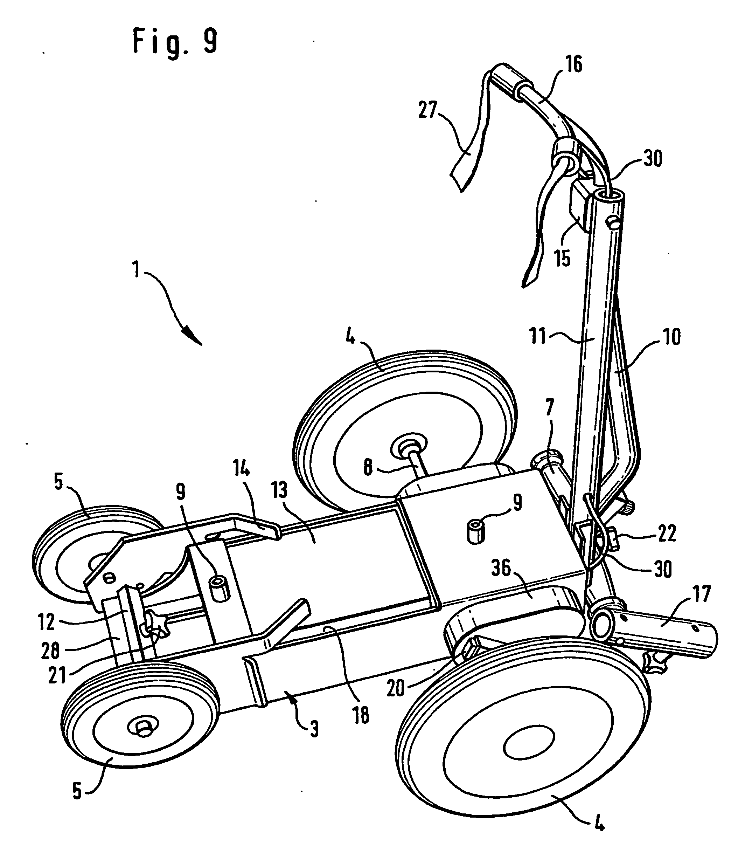

Fig. 9 zeigt den Caddie 1 in teilweise zusammengeklapptem Zustand. Das Rahmenelement 12 ist zum Chassis 3 hin um eine quer zum Chassis 3 verlaufende Schwenkachse geklappt. Die Batterie 13 ist in der Batterieaufnahme 18 angeordnet und durch die Auflage 14 des Rahmenelementes 12 nach oben fixiert. Der obere Abschnitt 10 der Griffstange 6 ist abgeklappt. Der Schirmhalter 17 ist um 90° um die Längsachse 29 des Handgriffs 7 gedreht angeordnet.

Fig. 10 zeigt den Caddie 1 in weitgehend zusammengeklapptem Zustand. Die Griffstange 6 ist auf das Chassis 3 abgeklappt. Die Breite b des Zwischenstücks 15 zwischen dem oberen Abschnitt 10 und dem unteren Abschnitt 11 der Griffstange 6 entspricht etwa dem Außendurchmesser a der Aufnahme 9. Die Halterung 38 der Griffstange 6 ist gegenüber der mittigen Anordnung am Chassis 3 nach außen versetzt, so daß der untere Abschnitt 11 und der obere Abschnitt 10 der Griffstange 6 beidseitig der Aufnahmen 9 auf dem Chassis 3 aufliegen. Der Handgriff 7 ist entgegen der Fahrtrichtung neben dem Chassis 3 angeordnet. Die Stütze 16 liegt zwischen den beiden Vorderrädern 5 am Chassis 3 an. Die Steckachsen 8 der Hinterräder 4 können in die Aufnahmen 9 gesteckt werden, um den Caddie 1 in die in Fig. 2 dargestellte Transportstellung zu bringen. In den Aufnahmen 9 können die Steckachsen 8 kraftschlüssig oder formschlüssig gehalten sein.

Die Aufnahmen 9 können auch lediglich als Öffnungen ausgebildet sein. In diesem Fall sollte die Breite b des Zwischenstücks 15 zwischen den Abschnitten 10 und 11 der Griffstange 6 mindestens dem Durchmesser d der Steckachsen 8 der Hinterräder 4 entsprechen. Zum Antrieb der Hinterräder 4 sind Getriebe vorgesehen, die in den Getriebegehäusen 36 beidseitig des Chassis 3 angeordnet sind. Zum Antrieb sind insbesondere Planetengetriebe vorgesehen. Die Planetengetriebe weisen gegenüber üblichen Schneckengetrieben einen erheblich höheren Wirkungsgrad auf, so daß die zum Antrieb benötigte Batterie 13 kleiner und leichter ausgebildet sein kann. Es kann jedoch auch zweckmäßig sein, die Getriebe im Motorgehäuse 35 anzuordnen. Durch die Anordnung der Batterie 13 im Chassis 3 weist der Caddie 1 einen niedrigen Schwerpunkt auf.

Anstatt der Schraubfixierung von Rahmenelement 12 und Griffstange 6 können auch formschlüssige Fixierungen wie beispielsweise Rasten zweckmäßig sein. Die Verwendung von Schrauben gewährleistet eine gute Stabilität des Caddies 1 und ermöglicht eine spielfreie Fixierung der Teile. Zur einfachen Betätigung der Schrauben 21, 22, 23 weisen diese Griffelemente auf, die beispielsweise aus Kunststoff ausgebildet sind.

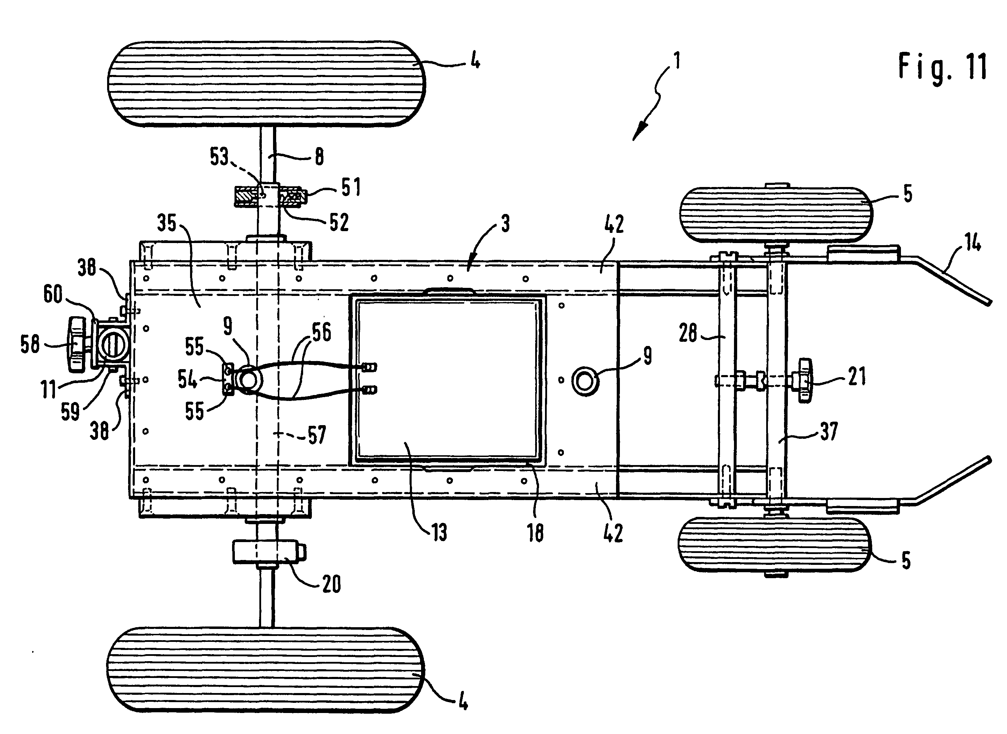

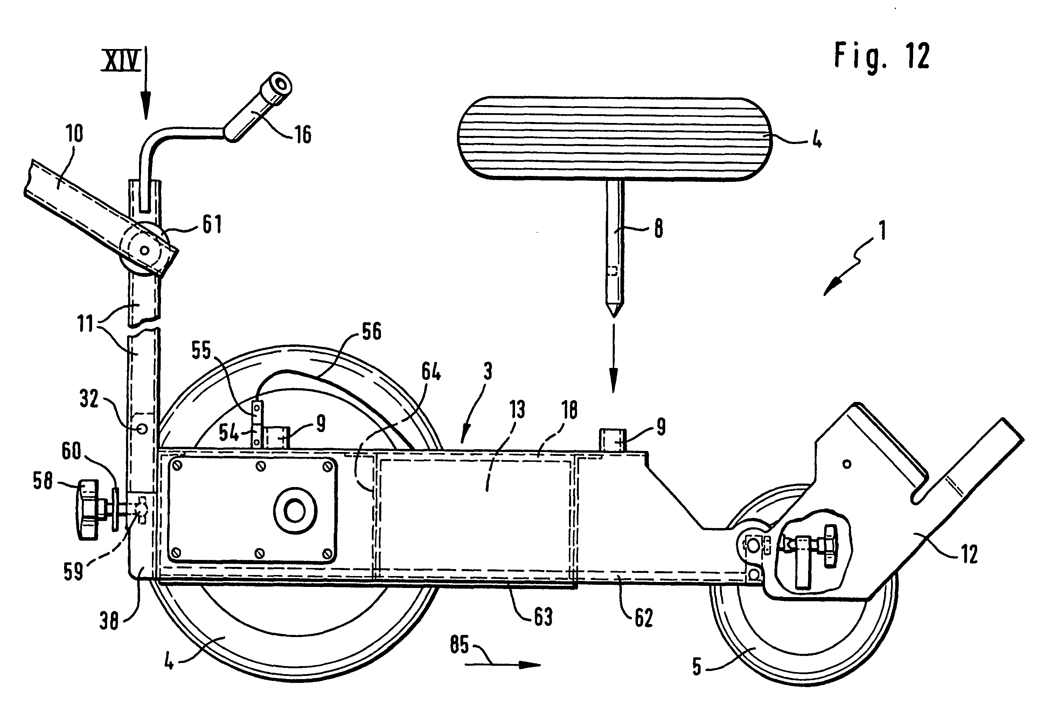

Ein weiteres Ausführungsbeispiel eines Caddies 1 ist in den Fig. 11 bis 21 dargestellt. Dabei sind Bauteile, die denen des in den Fig. 1 bis 10 dargestellten Caddies entsprechen, mit gleichen Bezugszeichen bezeichnet. Der in Fig. 11 in Draufsicht und in Fig. 12 in Seitenansicht dargestellte Caddie 1 besitzt ein Chassis 3, in dem eine Aufnahme 18 für eine Batterie 13 ausgebildet ist. Die Aufnahme 18 ist in Fahrtrichtung gesehen vor der Achse der Hinterräder 4 angeordnet. Die Batterieaufnahme 18 ist dabei zwischen den beiden durch das Chassis 3 gebildeten Längsstreben 42 angeordnet. Die Batterie 13 ist mit dem im Motorgehäuse 35 angeordneten Motor über zwei Leitungen 56 verbunden, die mit Steckern 55 in einen Steckkontakt 54 eingesteckt sind. Wie auch in Fig. 12 dargestellt, ist der Steckkontakt 54 in Fahrtrichtung 85 unmittelbar hinter der Aufnahme 9 auf der der Batterie 13 gegenüberliegenden Seite der Aufnahme 9 angeordnet. Die beiden Stecker 55 sind einander eng benachbart im Steckkontakt 54 eingesteckt, so daß die Leitungen 56 im Bereich der Aufnahme 9 angeordnet sind und die Stekker 55 unmittelbar neben der Aufnahme 9 aus dem Chassis 3 ragen. Bei im Steckkontakt 54 eingesteckten Steckern 55 kann die Steckachse 8 eines Hinterrads 4 nicht in die Aufnahme 9 eingesteckt werden. Hierdurch ist sichergestellt, daß im Transportzustand die Batterie und der Motor stets elektrisch voneinander getrennt sind. Ein unbeabsichtigtes Einschalten des Motors im Transportzustand ist hierdurch vermieden.

In Fig. 11 ist eine Schieberaste 20 im Schnitt dargestellt. Die Schieberaste 20 besitzt eine Taste 51, die durch eine Feder 52 gespannt ist und die mit einem Bolzen 53 verbunden ist. Bei Eindrücken der Taste 51 entgegen der Kraft der Feder 52 wird der Bolzen 53 aus einer Bohrung in der Steckachse 8 gedrückt, wodurch die Steckachse 8 freigegeben ist. Die beiden Steckachsen 8 sind mit den Schieberasten 20 in der durchgehenden Hohlwelle 57 fixiert.

Der untere Abschnitt 11 der Griffstange 6 ist beidseitig in Halterungen 38 um die Drehachse 32 drehbar gelagert. Die beiden Halterungen 38 sind dabei als L-förmige Winkel ausgebildet. Der untere Abschnitt 11 der Hältestange 6 ist über eine Schraube 58 lösbar am Chassis 3 fixiert. In Fig. 11 ist die Schraube 58 in fixiertem Zustand dargestellt, während sie in Fig. 12 gelöst dargestellt ist. Die Schraube 58 ist fest mit Bolzen 59 verbunden, die sich beidseitig der Schraube 58 erstrecken und in den Halterungen 38 drehbar gelagert sind. An der Schraube 58 ist eine Scheibe 60 festgelegt, die in fixiertem Zustand gegen den unteren Abschnitt 11 der Griffstange 6 drückt und diesen so fixiert. Der untere Abschnitt 11 der Griffstange 6 ist im Bereich der Schraube 58 geschlitzt ausgebildet. Die Schraube 58 ragt dabei durch den Schlitz im unteren Abschnitt 11. Durch Lösen der Schraube 58 kann diese um den Bolzen 59 geschwenkt werden, so daß der untere Abschnitt 11 nicht mehr fixiert ist. Der untere Abschnitt 11 kann um die Achse 32 geschwenkt und auf das Chassis 3 abgeklappt werden. Hierdurch ist ein einfaches und schnelles Lösen und Fixieren der Griffstange 6 gewährleistet. Das Chassis 3 ist aus einem Rahmen 62 und einem Bodenelement 63 gebildet. Zwischen dem Bodenelement 63 und dem Rahmen 62 ist im Bereich der Batterieaufnahme 18 ein Halterungsblech 64 festgelegt, an dem die Steuerungselektronik befestigt ist.

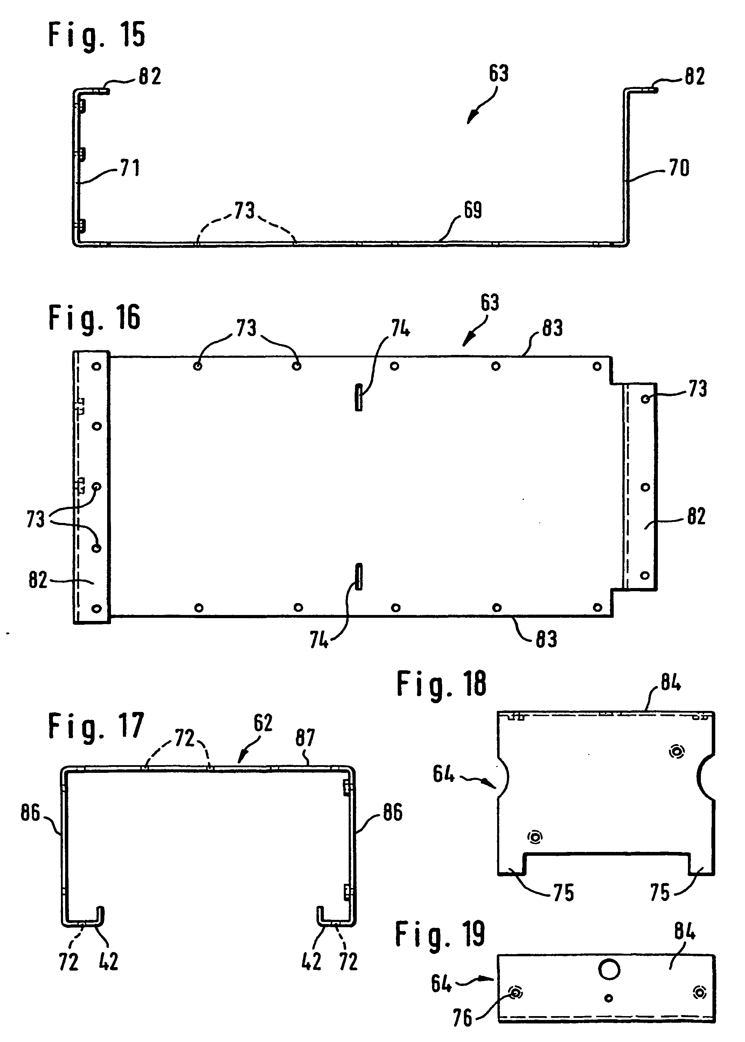

In den Fig. 15 und 16 ist das Bodenelement 63 dargestellt. Das Bodenelement 63 besitzt einen Boden 69, an den eine Vorderwand 70 und eine Rückwand 71 angeformt sind, so daß das Bodenelement 63 einen U-förmigen Querschnitt besitzt. Vorderwand 70 und Rückwand 71 besitzen jeweils an der dem Boden 69 abgewandten Seite einen in Fahrtrichtung nach vorne weisenden Rand 82, der Nietlöcher 73 aufweist. Entlang der Längsseiten 83 des Bodens 69 sind ebenfalls Nietlöcher 73 angebracht. Im Bereich der Batterieaufnahme besitzt der Boden 69 zwei quer zur Fahrtrichtung verlaufende Schlitze 74.

In Fig. 17 ist der Rahmen 62 in Seitenansicht dargestellt. Der Rahmen 62 ist U-förmig ausgebildet, wobei die Schenkel des U jeweils um zwei mal 90° nach innen gebogen sind, so daß sich Längsstreben 42 ergeben. Der Rahmen 62 bildet die Oberseite 87 des Chassis 3 sowie die in Fahrtrichtung 85 liegenden Seitenwände 86. Im Bereich der Längsstreben 42 besitzt der Rahmen 62 Nietöffnungen 72, die mit den an den Längsseiten 83 des Bodenelements 63 angeordneten Nietöffnungen 73 durch Niete verbunden werden. An der den Längsstreben 42 gegenüberliegenden Seite sind ebenfalls Nietöffnungen 72 zur Verbindung mit den an den Rändern 82 des Bodenelements angeordneten Nietöffnungen 73 vorgesehen. In den Fig. 18 und 19 ist das Halterungsblech 64 dargestellt. Das Halterungsblech 64 besitzt zwei Laschen 75, die in die Schlitze 74 eingesteckt werden. Die in Fig. 19 in Draufsicht dargestellte schmale Seite 84 des Halterungsblechs 64 ragt dabei in Richtung der Rückwand 71 des Bodenelements 63. Das Halterungsblech 74 besitzt in seiner schmalen Seite 84 Nietöffnungen 76 zur Verbindung mit dem Rahmen 62.

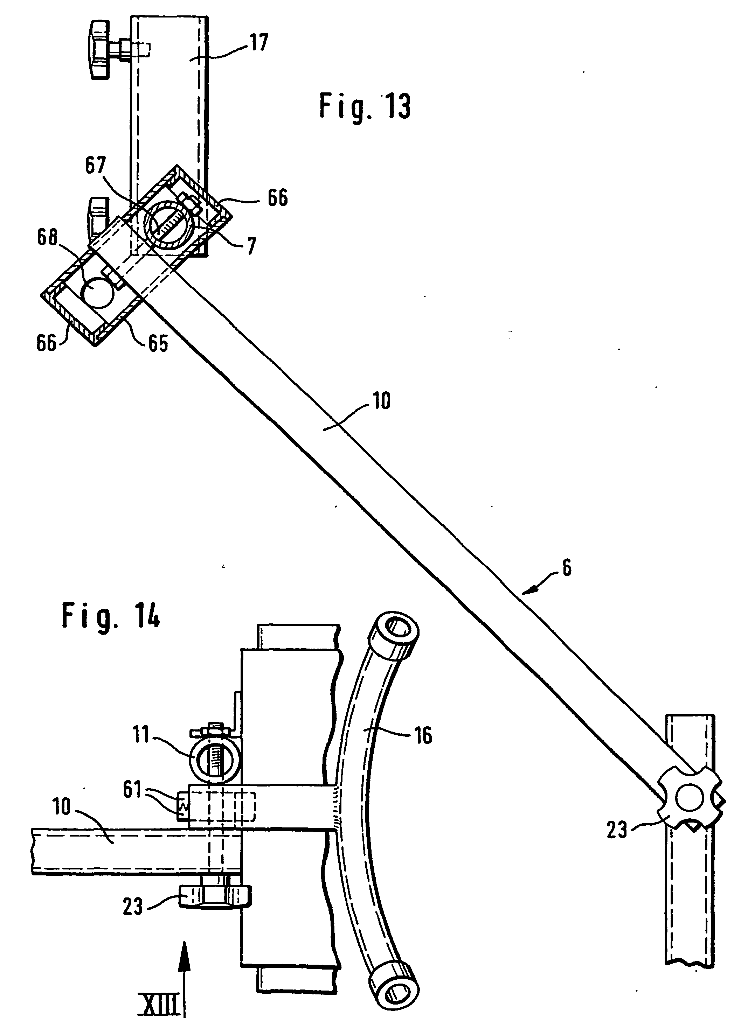

In Fig. 13 ist die Fixierung des Handgriffs 7 am oberen Abschnitt 10 der Griffstange 6 dargestellt. Am oberen Abschnitt 10 ist ein Verbindungsrohr 65 angeordnet, das etwa mittig eine Querbohrung besitzt, durch die der obere Abschnitt 10 geführt ist. Auf der nach oben ragenden Seite des Verbindungsrohres 65 ist eine weitere, senkrecht zur ersten Querbohrung angeordnete Querbohrung vorgesehen, durch die der Handgriff 7 ragt. Der Handgriff 7 ist mit dem oberen Abschnitt 10 der Griffstange 6 über eine Schraube 67 im Verbindungsrohr 65 fest verbunden. Auf der dem Handgriff 7 gegenüberliegenden Seite des oberen Abschnitts 10 besitzt das Verbindungsrohr 65 eine weitere Querbohrung, die eine Aufnahme 68 beispielsweise für Bedienungselemente bildet. Das Verbindungsrohr 65 ist beidseitig mit Endkappen 66 verbunden. An dem Handgriff 7 ist ein Schirmhalter 17 festgelegt.

Fig. 14 zeigt die Verbindung des unteren Abschnitts 11 mit dem oberen Abschnitt 10. Das zwischen den beiden Abschnitten angeordnete Zwischenstück ist durch zwei Zahnscheiben 61 gebildet, die jeweils mit einem Abschnitt der Griffstange 6 fest verbunden sind. Eine Schraube 23 durchragt beide Abschnitte der Griffstange 6 quer zu ihrer Längserstreckung sowie die beiden dazwischenliegenden Zahnscheiben 61 in ihrer Mittelachse. Durch Lockerung der Schraube 23 können die beiden Zahnscheiben 61 gegeneinander verdreht werden. Die Zahnung legt dabei die möglichen Winkel zwischen den beiden Abschnitten der Griffstange 6 fest. Am unteren Abschnitt 11 ist die Stütze 16 für eine Golftasche 2 festgelegt, insbesondere festgeschweißt.

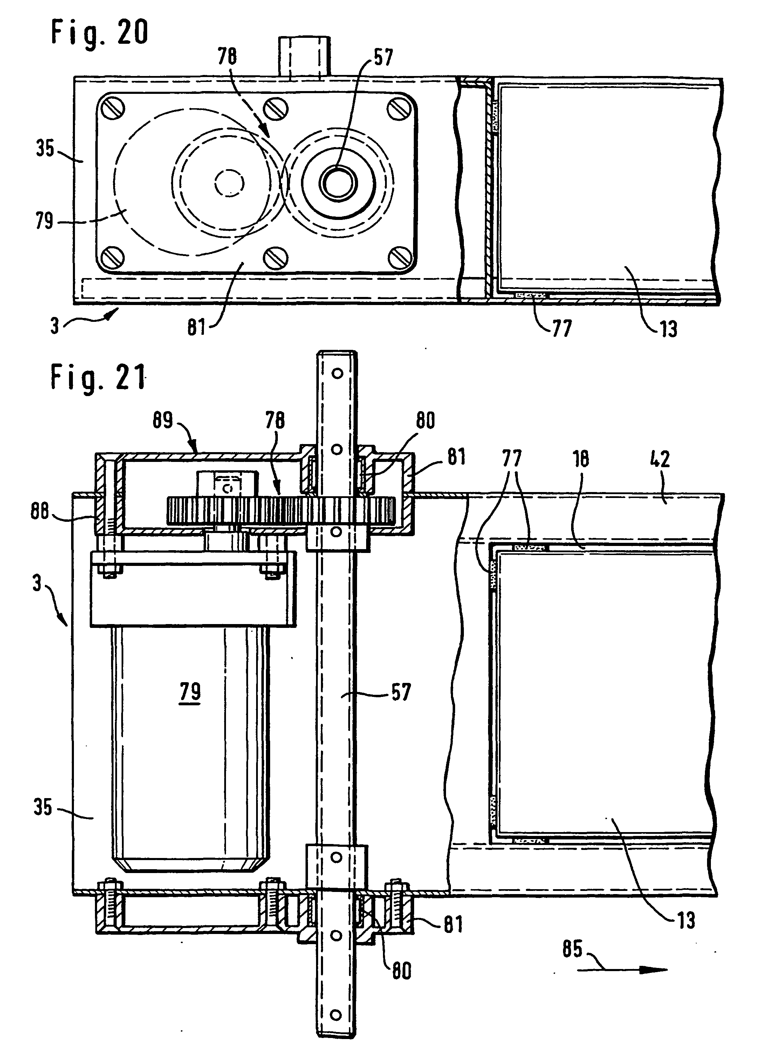

Die Fig. 20 und 21 zeigen das Chassis 3 im Bereich des Motorgehäuses 35. Im Motorgehäuse 35 ist der Motor 79 angeordnet, der zweckmäßig als 24-Volt-Motor ausgebildet ist. Der Motor 79 treibt über ein Stirnradgetriebe 78 die Hohlwelle 57 an. Die Hohlwelle 57 ist beidseitig am Chassis 3 in Abdeckungen 81 gelagert. Die Abdeckungen 81 sind zweckmäßig aus Kunststoff ausgebildet und dienen als Aufnahme für die Lager 80 der Hohlwelle 57. In einer der Abdeckungen 81 ist das Getriebe 78 angeordnet. Die Abdeckung 81 bildet mit einem Deckel 88, der im Inneren des Chassis 3 angeordnet ist, ein weitgehend geschlossenes Getriebegehäuse 89. Am Getriebegehäuse 89 ist der Motor 79 angeflanscht. Das Getriebegehäuse 89 schützt das Getriebe 78 vor Verschmutzung.

Die Batterie 13 ist in der Aufnahme 18 angeordnet. Zweckmäßig werden als Batterie 13 zwei in Reihe geschaltete Batterien verwendet. Hierdurch läßt sich die Leistung erhöhen. Die Batterie 13 ist mit Filz 77 in der Aufnahme 18 gelagert. Die Elektronik zur Steuerung des Motors ist an der in Fig. 12 gezeigten Zwischenplatte 64 befestigt, die die in Fahrtrichtung hinten liegende Seitenwand der Batterieaufnahme 18 bildet. Die Batterieaufnahme 18 ist dabei in Fahrtrichtung 85 vor der Hohlwelle 57 angeordnet, während der Motor 79 in Fahrtrichtung 85 hinter der Hohlwelle 57 liegt. Hierdurch ist die Gewichtsverteilung um die Hohlwelle 57 weitgehend ausgeglichen, so daß der Caddie 1 durch Druck auf die Griffstange 6 um die Hohlwelle 57 gedreht werden kann und so die Vorderräder 5 vom Boden abheben. In dieser Position kann der Caddie 1 einfach gezogen werden.

Die das Chassis 3 bildenden Blechteile sind bei der Fertigung zweckmäßig mit einer Folie beschichtet. Hierdurch können Beschädigungen der Blechteile, beispielsweise durch Verkratzen der Oberfläche, vermieden werden. Nach der Montage wird die Folie dann von den Blechteilen entfernt.

## Patentansprüche

1. Wagen zur Beförderung eines Behältnisses, insbesondere ein Caddie (1) für eine Golftasche (2), mit einem auf mindestens drei Rädern (4, 5) abgestützten Chassis (3), wobei zwei Hinterräder (4) vorgesehen sind, und mit einem an einer Griffstange (6) angeordneten Handgriff (7) zum Führen des Wagens in einem Gebrauchszustand und wobei der Wagen in einen Transportzustand bringbar ist,
**dadurch gekennzeichnet, dass** die Hinterräder (4) mit Steckachsen (8) versehen sind, die lösbar am Chassis (3) befestigt sind, und dass am Chassis (3) Mittel (9) vorgesehenen sind, durch welche im Transportzustand die Hinterräder (4) am Chassis (3) gehalten werden.

2. Wagen nach Anspruch 1,
**dadurch gekennzeichnet, daß** die Hinterräder (4) im Transportzustand auf dem Chassis (3) liegend gehalten sind und das Chassis (3) eine Breite (B) aufweist, die im wesentlichen dem Durchmesser (D_{H}) des Hinterrades (4) entspricht und eine Länge (L) besitzt, die etwa das Doppelte des Durchmessers (D_{H}) des Hinterrades (4) beträgt.

3. Wagen nach Anspruch 1 oder 2,
**dadurch gekennzeichnet, daß** als Mittel zur Halterung am Chassis (3) angeordnete Aufnahmen (9) vorgesehen sind, in welche die Steckachsen (8) einführbar sind.

4. Wagen nach Anspruch 3,
**dadurch gekennzeichnet, daß** die Steckachsen (8) in den Aufnahmen (9) kraftschlüssig gehalten sind.

5. Wagen nach einem der Ansprüche 1 bis 4,
**dadurch gekennzeichnet, daß** die Griffstange (6) einen oberen Abschnitt (10), an dem der Handgriff (7) angeordnet ist, und einen unteren Abschnitt (11), der am Chassis (3) festgelegt ist, aufweist, wobei die beiden Abschnitte (10, 11) im Transportzustand auf das Chassis (3) geklappt sind und die Hinterräder (4) im Transportzustand auf der geklappten Griffstange (6) aufliegen.

6. Wagen nach einem der Ansprüche 1 bis 5,
**dadurch gekennzeichnet, daß** die Griffstange (6) am Chassis (3) schwenkbar gelagert und im Gebrauchszustand am Chassis (3) mittels einer Schraube (22, 58) spielfrei fixierbar ist.

7. Wagen nach Anspruch 6,
**dadurch gekennzeichnet, daß** die Schraube (58) am Chassis (3) aus dem Bereich der Griffstange (6) herausschwenkbar gelagert ist.

8. Wagen nach einem der Ansprüche 1 bis 7,
**dadurch gekennzeichnet, daß** der Wagen zwei Vorderräder (5) aufweist, die an einem Rahmenelement (12) festgelegt sind, wobei das Rahmenelement (12) am Chassis (3) um eine quer zur Längsrichtung des Chassis verlaufende Schwenkachse gelagert und im Transportzustand zum Chassis (3) hin geklappt ist.

9. Wagen nach einem der Ansprüche 1 bis 8,
**dadurch gekennzeichnet, daß** der Wagen von einem Elektromotor (79) angetrieben ist, wobei als Energiequelle eine Batterie (13) dient, die in einer Batterieaufnahme (18) im Chassis (3) herausnehmbar angeordnet ist.

10. Wagen nach Anspruch 9,
**dadurch gekennzeichnet, daß** in der Batterieaufnahme (18) Kontaktbügel (19) angeordnet sind, auf denen die Pole der Batterie (13) aufliegen.

11. Wagen nach Anspruch 9,
**dadurch gekennzeichnet, daß** am Chassis (3) unmittelbar benachbart zu einer Aufnahme (9) ein Steckkontakt (54) angeordnet ist, über den die Batterie (13) mit dem Motor (79) verbindbar ist.

12. Wagen nach einem der Ansprüche 9 bis 11,
**dadurch gekennzeichnet, daß** der Motor (79) den Wagen über ein Getriebe (78) antreibt, wobei das Getriebe (78) in einem im wesentlichen abgeschlossenen Getriebegehäuse (89) angeordnet ist.

13. Wagen nach Anspruch 12,
**dadurch gekennzeichnet, daß** das Getriebegehäuse durch eine außerhalb am Chassis (3) angeordnete Abdeckung (81) und einen im Chassis (3) angeordneten Deckel (88) gebildet ist.

14. Wagen nach Anspruch 8 bis 13,
**dadurch gekennzeichnet, daß** das Rahmenelement (12) eine Auflage (14) für das Behältnis aufweist, wobei die Auflage (14) für das Behältnis im Transportzustand die Batterie (13) fixiert.

15. Wagen nach einem Ansprüche 8 bis 14,
**dadurch gekennzeichnet, daß** das Rahmenelement (12) im Gebrauchszustand durch Verspannen mit einer Schraube (21) am Chassis (3) spielfrei fixiert ist.

16. Wagen nach einem der Ansprüche 5 bis 15,
**dadurch gekennzeichnet, daß** die beiden Abschnitte (10, 11) der Griffstange (6) über ein seitlich zur Längserstreckung der Griffstange (6) angeordnetes Zwischenstück (15) miteinander verbunden sind, wobei die Breite (b) des Zwischenstücks (15) zwischen den Abschnitten (10, 11) der Griffstange (6) mindestens dem Durchmesser (d) der Steckachsen (8), insbesondere dem Außendurchmesser (a) der Aufnahmen (9) für die Steckachsen (8) entspricht und das Zwischenstück (15) definierte Positionen der Abschnitte (10, 11) der Griffstange (6) zueinander festlegt.

17. Wagen nach Anspruch 16,
**dadurch gekennzeichnet, daß** eine Stütze (16) zum Abstützen des Behältnisses vorgesehen ist, wobei die Stütze (16) am Zwischenstück (15) der Griffstange (6) festgelegt ist.

18. Wagen nach einem der Ansprüche 1 bis 17,
**dadurch gekennzeichnet, daß** die Hinterräder (4) und/oder die Vorderräder (5) in einer Drehrichtung mit einem Freilauf ausgestattet sind.

19. Wagen nach einem der Ansprüche 1 bis 18,
**dadurch gekennzeichnet, daß** das Chassis (3) aus zwei gebogenen Blechen gebildet ist, die miteinander vernietet sind.

20. Wagen nach Anspruch 19,
**dadurch gekennzeichnet, daß** ein Blech ein Bodenelement (63) bildet, das einteilig mit einer Vorderwand (70) und einer Rückwand (71) ausgebildet ist und das andere Blech ein Rahmen (62) ist, der die Oberseite (87) und die Seitenwände (86) des Chassis (3) bildet.

## Claims

1. A carriage for transporting a container, in particular, a caddie (1) for a golf bag (2) comprising a chassis (3) supported on at least three wheels (4, 5), wherein two rear wheels (4) are provided, and comprising a handle (7) arranged on a handlebar (6) for guiding the carriage in a state of use, and wherein the carriage can be converted into a transport state,
**characterised in that** the rear wheels (4) are provided with halfshafts (8) that are fastened detachably on the chassis (3) and that means are provided on the chassis (3) through which the rear wheels (4) are secured on the chassis (3) in the transport state.

2. The carriage according to claim 1,
**characterised in that** the rear wheels (4) in the transported state are supported lying on the chassis (3) and **in that** the chassis (3) has a width (B) that matches substantially the diameter (D_{H}) of the rear wheel (4) and has a length (L) that is approximately twice the diameter (D_{H}) of the rear wheel (4).

3. The carriage according to claim 1 or 2,
**characterised in that** receptacles (9) arranged on the chassis (3) are provided as a means for securing, into which receptacle the halfshafts (8) are insertable.

4. The carriage according to claim 3,
**characterised in that** the halfshafts (8) non-positively engage the the receptacle (9).

5. The carriage according to one of the claims 1 to 4,
**characterised in that** the handlebar (6) has an upper section (10), on which the handle (7) is arranged, and a lower section (11) that is secured on the chassis (3), wherein the two sections (10,11) in the transport state are folded onto the chassis (3) and the rear wheels (4) in the transport state rest on the folded handlebar (6).

6. The carriage according to one of the claims 1 to 5,
**characterised in that** the handlebar (6) is pivotably supported on the chassis (3) and, in the state of use, is securable on the chassis (3) by means of a screw (22, 58) without play.

7. The carriage according to claim 6,
**characterised in that** a screw (58) is supported on the chassis (3) so as to be pivotable out of the area of the handlebar (6).

8. The carriage according to one of the claims 1 to 7,
**characterised in that** the carriage has two front wheels (5) secured on a frame element (12), wherein the frame element (12) is supported on the chassis (3) so as to be pivotable about a pivot axis extending transversely to the longitudinal direction of the chassis and is folded in the transport state toward the chassis (3).

9. The carriage according to one of the claims 1 to 8,
**characterised in that** the carriage is driven by an electric motor (79), wherein as an energy source a battery (13) is provided that is removably arranged in a battery receptacle (18) in the chassis (3).

10. The carriage according to claim 9,
**characterised in that** in the battery receptade (18) bow contacts (19) are arranged on which the poles of the battery (13) are resting.

11. The carriage according to claim 9,
**characterised in that** a plug-in contact (54) is arranged on the chassis (3) directly adjacent to a receptacle (9) via which the battery (13) is connectable to the motor (79).

12. The carriage according to one of the claims 9 to 11,
**characterised in that** the motor (79) drives the carriage by means of a gearbox (78), wherein the gearbox (78) is arranged in a substantially closed gearbox housing (89).

13. The carriage according to claim 12,
**characterised in that** the gearbox housing is formed by a cover (81) arranged externally on the chassis (3) and a lid (88) arranged within the chassis (3).

14. The carriage according to claim 8 to 13,
**characterised in that** the frame element (12) has a rest (14) for the container, wherein the rest (14) for the container secures the battery (13) in the transport state.

15. The carriage according to one of the claims 8 to 14,
**characterised in that** the frame element (12) is secured without play in the state of use by clamping with a screw (21) on the chassis (3).

16. The carriage according to one of the claims 5 to 15,
**characterised in that** the two sections (10, 11) of the handlebar (6) are connected to one another by an intermediate member (15) arranged laterally relative to a longitudinal extension of the handlebar (6), wherein the width (b) of the intermediate member (15) between the sections (10, 11) of the handlebar (6) matches at least the diameter (d) of the halfshafts (8), in particular, the outer diameter (a) of the receptacles (9) for the halfshafts (8), and wherein the intermediate member (15) secures defined positions of the sections (10, 11) of the handlebar (6) relative to one another.

17. The carriage according to claim 16,
**characterised in that** a support (16) for supporting the container is provided, wherein the support (16) is secured on the intermediate member (15) of the handlebar (6).

18. The carriage according to one of the claims 1 to 17,
**characterised in that** the rear wheels (4) and/or the front wheels (5) are provided with a freewheeling action in one rotational direction.

19. The carriage according to one of the claims 1 to 18,
**characterised in that** the chassis (3) is formed of two bent sheet metal parts that are connected to one another by riveting.

20. The carriage according to claim 19,
**characterised in that** a sheet metal part forms a bottom element (63) that is formed as a unitary part including a front wall (70) and a back wall (71) and wherein the other sheet metal part is a frame. (62) that forms the top side (87) and the sidewalls (86) of the chassis (3).

## Revendications

1. Chariot pour le transport d'un contenant, en particulier d'un caddie (1) pour un sac de golf (2), avec un châssis (3) soutenu sur au moins trois roues (4,5), deux roues arrière (4) étant prévues, et avec une poignée (7) disposée sur un guidon (6), pour guider le chariot en un état d'utilisation, et le chariot étant susceptible d'être placé en un état de transport, **caractérisé en ce que** les roues arrière (4) sont munies d'axes d'enfichage (8), fixées de façon désolidarisable sur le châssis (3), et **en ce que** sur le châssis (3) sont prévus des moyens (9), au moyen desquels, à l'état de transport, les roues arrière (4) sont maintenues sur le châssis (3).

2. Chariot selon la revendication 1, **caractérisé en ce que** les roues arrière (4) à l'état de transport sont montées horizontalement sur le châssis (3), et le châssis (3) présentant une largeur (B) correspondant sensiblement au diamètre (D_{H}) de la roue arrière (4) et ayant une longueur (L) faisant à peu près le double du diamètre (D_{H}) de la roue arrière (4).

3. Chariot selon la revendication 1 ou 2, **caractérisé en ce qu'**on prévoit, comme moyen de fixation, des logements (9), disposés sur le châssis (3) et dans lesquels les axes d'enfichage (8) sont susceptibles d'être introduits.

4. Chariot selon la revendication 3, **caractérisé en ce que** les axes d'enfichage (8) sont maintenus avec une liaison à interaction de forces dans les logements (9).

5. Chariot selon l'une des revendications 1 à 4, **caractérisé en ce que** le guidon (6) présente un tronçon supérieur (10), sur lequel est disposée la poignée (7), et un tronçon inférieur (11), fixé sur le châssis (3), les deux tronçons (10,11) à l'état de transport, étant rabattus sur le châssis (3) et les roues arrière (4), à l'état de transport, reposant sur le guidon (6) rabattu.

6. Chariot selon l'une des revendications 1 à 5, **caractérisé en ce que** le guidon (6) est monté à pivotement sur le châssis (3) et, à l'état d'utilisation, est susceptible d'être fixé, sans jeu sur le châssis (3), au moyen d'une vis (22,58).

7. Chariot selon la revendication 6, **caractérisé en ce que** la vis (58) est montée sur le châssis (3), de façon à pouvoir être extraite par pivotement hors de la zone du guidon (6).

8. Chariot selon l'une des revendications 1 à 7, **caractérisé en ce que** le chariot présente deux roues avant (5) fixées sur un élément de cadre (12), l'élément de cadre (12) étant monté, sur le châssis (3), autour d'un. axe de pivotement s'étendant transversalement par rapport à la direction longitudinale du châssis, et étant rabattu vers le châssis (3) lorsqu'on est à l'état de transport.

9. Chariot selon l'une des revendications 1 à 8, **caractérisé en ce que** le chariot est entraîné par un moteur électrique (79), sachant qu'on utilise comme source d'énergie une batterie (13), disposée de façon amovible dans un logement pour batterie (18) situé dans le châssis (3).

10. Chariot selon la revendication 9, **caractérisé en ce que**, dans le logement pour batterie (18), sont disposés des étriers de contact (19), sur lesquels reposent les pôles de la batterie (13).

11. Chariot selon la revendication 9, **caractérisé en ce que** sur le châssis (3) est disposé, directement au voisinage d'un logement (9), un contact à enfichage (54), par l'intermédiaire duquel la batterie (13) est susceptible d'être reliée au moteur (79).

12. Chariot selon l'une des revendications 9 à 11, **caractérisé en ce que** le moteur (79) entraîne le chariot à la manière d'une transmission (78), la transmission (78) étant disposée dans un boîtier de transmission (89) pratiquement fermé.

13. Chariot selon la revendication 12, **caractérisé en ce que** le boîtier de transmission est formé par un capot (81), disposé à l'extérieur sur le châssis (3), et un couvercle (88), disposé dans le châssis (3).

14. Chariot selon les revendications 8 à 13, **caractérisé en ce que** l'élément de cadre (12) présente un reposoir (14) pour le contenant, le reposoir (14) pour le contenant fixant la batterie (13) lorsqu'on est à l'état de transport. ,

15. Chariot selon l'une des revendications 8 à 14, **caractérisé en ce que** l'élément de cadre (12), à l'état d'utilisation, est fixé sans jeu sur le châssis (3), par serrage avec une vis (21).

16. Chariot selon l'une des revendications 5 à 15, **caractérisé en ce que** les deux tronçons (10,11) du guidon (6) sont reliés ensemble par l'intermédiaire d'une pièce intermédiaire (15) disposée latéralement par rapport à l'étendue longitudinale du guidon (6), la largeur (b) de la pièce intermédiaire (15), entre les tronçons (10,11) du guidon (6), correspondant au moins au diamètre (d) des axes d'enfichage (8) en particulier le diamètre extérieur (a) de logement (9) pour les axes d'enfichage (8), et la pièce intermédiaire (15) fixant des positions mutuelles définies des tronçons (10,11) du guidon (6).

17. Chariot selon la revendication 16, **caractérisé en ce qu'**un étai (16) est prévu pour soutenir le contenant, l'étai (16) étant fixé sur la pièce intermédiaire (15) du guidon (6).

18. Chariot selon l'une des revendications 1 à 17, **caractérisé en ce que** les roues arrière (4) et les roues avant (5) sont équipées d'une roue libre agissant dans un sens de rotation.

19. Chariot selon l'une des revendications 1 à 18, **caractérisé en ce que** le châssis (3) est formé de trois tôles pliées, rivetées ensemble.

20. Chariot selon la revendication 19, **caractérisé en ce qu'**une tôle forme un élément de fond (63), réalisé d'une seule pièce avec une paroi avant (70) et une paroi arrière (71), et l'autre tôle forme un cadre (62), formant la face supérieure (87) et les parois latérales (86) du châssis (3).
